# EUROPÄISCHE PATENTANMELDUNG

(11) **EP 3 718 619 A1**
(43) Veröffentlichungstag der Anmeldung: **07.10.2020**
(21) Anmeldenummer: 20164631.2
(22) Anmeldetag: 20.03.2020
(51) Int. Cl.: B01D 35/143

(54) **FILTERELEMENTANZEIGE**

(30) Priorität: 01.04.2019 DE 102019204596
(71) Anmelder: Filtration Group GmbH, 74613 Öhringen (DE)
(72) Erfinder: GRAJER, Christian, 74420 Oberrot (DE); Jarbot, Gerd, 74613 Öhringen (DE); HAJ HASSINE, Atef, 74613 Öhringen (DE)
(74) Vertreter: BRP Renaud & Partner mbB Rechtsanwälte Patentanwälte Steuerberater

(57) **Zusammenfassung**

Die Erfindung betrifft eine Filterelementanzeige (1) zum Anzeigen, dass in einem Aufnahmeraum (6) für ein Filterelement (7), insbesondere eines Filtergehäuses (5), ein Filterelement (7) vorhanden ist oder nicht und hier Filterelemente (7) unterschiedlicher Abmessungen und Geometrie verwendet werden können.
Die Filterelementanzeige (1) weist eine mechanische Wirkkette (10) mit Kolben (15, 17) und Druckfedern (18, 19) auf, wobei die Wirkkette (10) über einen in den Aufnahmeraum (6) ragenden Stößel (11) einen permanenten Kontakt zwischen der Filterelementanzeige (1) und dem Filterelement (7) herstellt.

Die vorliegende Erfindung wird zum Filtern von Betriebsstoffen und/oder Schmierstoffen bei technischen Baueinheiten/Maschineneinheiten (8) oder Motoren verwendet.

## Beschreibung

Die vorliegende Erfindung betrifft eine Filterelementanzeige zum Anzeigen, dass in einem Aufnahmeraum für ein Filterelement, insbesondere eines Filtergehäuses, ein Filterelement vorhanden ist oder nicht, mit den Merkmalen des Oberbegriffs des Anspruchs 1.

Aus der DE 101 30 380 A1 ist eine Einrichtung zur Anzeige eines Verschmutzungsgrads eines Filterelements, insbesondere eines Flüssigkeitsfilterelements bekannt, wobei das Filterelement im Filtergehäuse zwischen dem Zulauf und dem Ablauf einer zu filternden Flüssigkeit angeordnet ist. Zur Identifikation des Verschmutzungsgrades des Filterelements wird eine Druckdifferenz zwischen der zulaufenden und ablaufenden Flüssigkeit im Bereich des Filtereinsatzes ermittelt. Hierzu wird diese Druckdifferenz, also der Druckabfall, gegen eine mechanische Feder-/Kolbeneinrichtung erfasst, wobei entsprechend der Verschmutzung der gegen die Feder wirkende Kolben in der mechanischen Einrichtung mehr oder weniger verschoben wird. Entsprechend dieser Verschiebung, welche in jeder Verschiebeposition einer bestimmten Verschmutzung entspricht, wirkt diese mechanische Einrichtung auf eine Anzeigevorrichtung in Form eines Zeigers.

Weiter weist diese bekannte Einrichtung zur Anzeige eines Verschmutzungsgrads ein Sensormodul auf, wobei der im Sensormodul vorhandene Kolben und die Feder über zwei Öffnungen mit der Schmutzseite und mit der Reinseite des Filtergehäuses verbunden sind und arbeitet somit als Druckabfallsensor. Das Sensormodul ist mittels geeigneter Adapter und/oder Befestigungssockel von außen an das Filtergehäuse anbaubar und ist somit geeignet bei Filtereinheiten nachgerüstet zu werden. Eine weiterführende Ausgestaltung zeigt im Sensorgehäuse eine Membran auf, die zur Trennung zwischen den jeweiligen Räumen der Schmutzseite und der Reinseite im Sensormodul dient. Der Kolben und die Feder sind hierbei in einem rohrförmigen Körper angeordnet. Der rohrförmige Körper ist hierzu mit einem Ende zur Schmutzseite weisend im Sensorgehäuse dicht und fest aufgenommen. An seinem entgegengesetzten in das Sensorgehäuse ragenden Ende ist die Membran befestigt, wobei die Membran als ringförmige Membran oder als Rollmembran ausgeführt sein kann.

Das gesamte bekannte Sensormodul dient zur Identifikation und Anzeige des Verschmutzungsgrads der Filtereinheit. Ein neu und nicht verschmutztes eingebrachtes Filterelement wird bei der zuvor beschriebenen Druckmessung zwischen der Schmutzseite und der Reinseite keine Anzeige bewirken, woraus nicht darauf geschlossen werden kann, dass somit auch kein Filterelement im Filtergehäuse vorhanden ist. Daraus kann geschlossen werden, dass ein nicht vorhandenes Filterelement ebenfalls keine Druckdifferenz zwischen der Schmutzseite und der Reinseite aufbaut und somit die Anzeige des Sensormoduls nichts anzeigt. Der mögliche Druckabfall bei einem neuen und nicht verschmutzten Filterelement ist nicht dazu geeignet eine Anzeige des Sensormoduls zu bewirken. Eine zuverlässige Aussage, ob ein Filterelement im Filtergehäuse vorhanden ist oder nicht kann mit der zuvor beschriebenen technischen Ausführung nicht erfolgen.

Eine weitere Anordnung einer Filtereinheit, insbesondere eines Staubfilters in einem Gehäuse eines Elektro-Staubsaugers geht aus der DE 197 25 990 A1 hervor. Die dort vorgestellte Filtereinheit mit Staubfilter ist dafür geeignet, einen eingelegten bzw. nicht eingelegten Staubfilter mittels einer Anzeige kenntlich zu machen. Die Anzeige, ob ein Staubfilter eingelegt ist oder nicht ist vom Betriebszustand des Staubsaugers unabhängig, so dass beispielsweise durch ein Sichtfenster ein farbig gekennzeichneter Bereich des Staubbeutels das Vorhandensein des Staubfilters eindeutig kennzeichnet sowie diesen anzeigt. Weiter ist diese Anzeige außer für einen vorhandenen Staubfilter dafür geeignet, gleichzeitig die richtige, vorgesehene Position des Staubfilters durch diese Anzeige anzuzeigen. Auch ist es möglich, dass durch Fehlen des Staubfilters bzw. eines nicht richtig positionierten Staubfilters die Inbetriebnahme des Staubsaugers verhindert werden kann. Für die zuvor genannten Merkmale und Eigenschaften ist der Staubfilter mit einer Halteplatte versehen, welche einen Bereich, beispielsweise eine kleine Klappe aufweist, die durch Klappen und/oder Schwenken den ordnungsgemäßen Zustand des eingelegten Staubfilters in einem von außen einsehbaren Schaufenster des Staubsaugers anzeigt. In jedem Fall besteht zwischen dem Staubfilter, insbesondere zwischen der Halteplatte und der Anzeigeeinheit ein unmittelbarer ständiger Kontakt. Weiter sind in der Halteplatte Öffnungen für Blas- und Saugstutzen vorhanden, welche spezifisch für den Staubsauger ausgelegt und angeordnet sind. Eine Übereinstimmung mit diesen und den Öffnungen in der Halteplatte sind für einen sicheren und einwandfreien Betrieb des Staubsaugers notwendig.

Im Weiteren kann die zuvor beschriebene Funktion durch eine elektrische Abfrage in Form einer "Sicherheitsschaltung" bzw. eines Abfragestromkreises erfolgen. Hierzu weist die Halteklappe beispielsweise elektrische Leiter auf, die bei richtig positionierter Halteklappe Kontakte im Gehäuse des Staubsaugers verbinden und somit einen Stromkreis, als Bestätigung des vorhandenen Filterelements sowie dessen richtige Positionierung bestätigen. Die elektrischen Leiter können hierzu innerhalb der Materialstärke der Halteklappe verlaufen, oder als aufgeklebte flache elektrische Bahnen ähnlich gedruckter elektrischer Bahnen auf Platinen ausgeführt sein. Auch können diese elektrischen Leiter durch stellenweise Graphitbeschichtungen der Halteplatte gebildet werden.

Eine weitere Ausführung zur Identifikation eines vorhandenen und richtig eingelegten Staubfilters besteht darin, dass durch besondere geometrische Ausgestaltungen wie beispielsweise vorstehende Ausformungen eine Abfrage des Vorhandenseins eines Staubfilters über Lichtschranken erfolgen kann. Eine hierzu verwendbare Anzeige kann beispielsweise mittels farbigen Signallampen erfolgen. Durch geeignete bauliche Ergänzungen bzw. Ausgestaltungen der Halteplatte kann auch die Verwendung eines für diesen Staubsauger nicht vorgesehenen Staubfilters dem Benutzer mittels des Sichtfensters mitgeteilt werden, wobei auch korrespondierende Geometrien zwischen dem Staubbeutel/Staubfilter und dem Gehäuse des Staubsaugers übereinstimmen müssen. Auch hier kann durch eine nicht Übereinstimmung von elektrischen Leitern und Kontakten die Inbetriebnahme verhindert werden. Die Verwendung von falschen, für diesen Staubsauger nicht vorgesehenen Staubfiltern kann durch eine fehlende Filterwirkung zu starken Verunreinigungen des Saugers sowie der Umgebung, als auch zu einer Beschädigung des Staubsaugers führen. Durch die geometrischen Spezifikationen dieses Staubfilters und der Halteplatte wird die Verwendung von anderen, nicht für diesen Staubsauger vorgesehenen Staubfiltern, sicher verhindert und somit der sichere und einwandfreie Betrieb gewährleistet.

Die vorliegende Erfindung beschäftigt sich mit dem Problem, für eine Filterelementanzeige der vorstehend beschriebenen Art eine verbesserte Ausführungsform anzugeben, die sich insbesondere mit der Anzeige des Vorhandenseins oder nicht Vorhandenseins eines solchen Filterelements, in einem dafür vorgesehenen Filtergehäuses, auszeichnet.

Dieses Problem wird erfindungsgemäß durch den Gegenstand des unabhängigen Anspruchs gelöst. Vorteilhafte Ausführungen sind Gegenstand der abhängigen Ansprüche.

Die Erfindung beruht auf dem allgemeinen Gedanken, dass bei technischen Baueinheiten bzw. Maschinen oder Motoreinheiten möglichen Verunreinigungen von Treibstoffen und/oder Schmierstoffen verhindert werden, bzw. bei möglichen Verunreinigungen diese gereinigt werden müssen. Hierzu werden Filterelemente in entsprechenden Aufnahmeräumen, insbesondere in Filtergehäusen eingebracht bzw. eingebaut und nach einer maximalen zulässigen Betriebszeit und/oder Verschmutzung ausgetauscht. Für den sicheren und einwandfreien Betrieb solcher Filtersysteme ist es bei den zuvor erwähnten Einheiten notwendig zu wissen, ob ein Filterelement in den dafür vorgesehenen Aufnahmeraum eingebracht wurde oder nicht. Dies erfolgt erfindungsgemäß mittels einer Anzeige, welche verbindlich das Vorhandensein oder nicht Vorhandensein eines Filterelements identifiziert und bei einem vorhandenen Filterelement dieses in der Anzeige anzeigt.

Von besonderer Bedeutung ist hierbei, dass in dem Aufnahmeraum des Filterelements in ihrer Geometrie und/oder Abmessungen unterschiedlich ausgeprägte Filterelemente verwendet werden können. Derartig unterschiedlich ausgeprägte Filterelemente führen beispielsweise durch spezielle Anpassungen und/oder Weiterentwicklungen des Filterelements zu deren abweichenden Ausführungen ihrer Geometrie und/oder Abmessungen. Auch kann es sein, dass Filterelemente mit gleichen Filterwirkungen und Filterergebnissen, aber mit unterschiedlichen Filterwerkstoffen und verschiedenen Aufbauten zu unterschiedlichen, stark abweichenden Filterelementen führen. Somit weisen diese Filterelemente erhebliche Abweichungen in ihrer Erscheinungsform, insbesondere in ihrer Geometrie oder ihren Abmessungen bzw. Bauform und im Filterverhalten auf.

Die erfindungsgemäße hierbei verwendete Filterelementanzeige ist grundlegend als mechanische Wirkkette aus Bauteilen wie einem Gehäuse, Kolben, Druckfedern und Stößel aufgebaut.

So besteht diese Wirkkette beispielsweise aus einem Stößel, der als Stange oder als Gewindestange ausgebildet ist und mit seinem in den Aufnahmeraum für das Filterelement weisenden Ende ragt und an einer dafür vorgesehenen Stelle eines Filterelements mit diesem in Kontakt steht. Dieser Kontakt erfolgt direkt, so dass der Stößel unmittelbar das Filterelement berührt, sobald und solange es ordnungsgemäß im Aufnahmeraum aufgenommen ist. Der Stößel kann hierbei als Stange in eine entsprechende Sacklochbohrung eines ersten Kolbens eingepresst, oder in dieser Sacklochbohrung verklebt sein.

Eine vorteilhafte Ausführung besteht darin, dass der Stößel als Gewindestange ausgeführt ist. Hier wird die Gewindestange in eine Sackloch-Gewindebohrung eingeschraubt und mittels eines Befestigungsmittels, beispielsweise einer Sechskantmutter am ersten Kolben dauerhaft und fest fixiert. Diese Ausführungsform des Stößels lässt eine in Stößellängsrichtung mögliche Verschiebung durch unterschiedliche Einschraubtiefen zu, was zum Einstellen der freien Stößellänge genutzt werden kann. Der dauerhafte Kontakt zwischen dem freien Stößelende und dem Filterelement erfolgt hierbei beispielsweise auf einer am Filterelement ausgeprägten Kontaktfläche eines Bauteils, zum Beispiel einer Endplatte des Filterelements. Diese Kontaktfläche kann in vielfältiger Form, beispielsweise zurückgesetzte oder hervorstehende Bereiche des Filterelements ausgebildet sein.

Der erste Kolben der Filterelementanzeige wird in einem ersten Zylinderraum aufgenommen und geführt. Dieser erste Zylinderraum ist als zylindrische Bohrung in einem Gehäuse der Filterelementanzeige eingebracht. Der erste Kolben mit Gewindestange wird im Endbereich des Gehäuses zum Filterelement weisend durch ein Sicherungsmittel, beispielsweise einen Sicherungsring am Herausfallen aus dem ersten Zylinderraum gehindert. Hierzu kann im ersten Zylinderraum und im Gehäuse der Filterelementanzeige ein Einstich zur Aufnahme des Sicherungsrings eingebracht sein.

An seinem vom Stößel abgewandten Ende kann am ersten Kolben eine Führungshülse einstückig ausgebildet sein, welche in den ersten Zylinderraum hineinragt. An der äußeren Zylinderfläche der Führungshülse ist eine erste oder äußere Druckfeder angeordnet. Die Durchmesser von erster Druckfeder und Führungshülse können optional so aufeinander abgestimmt sein, dass die erste Druckfeder auf die Führungshülse aufgeschoben wird, so dass die erste Druckfeder beim Aufschieben in ihrem Durchmesser entsprechend ihrer Feder- und Materialelastizität leicht aufgeweitet wird und somit auf der Führungshülse in ihrer Lage fest positioniert und gehalten ist. Entlang der äußeren Zylinderfläche wird diese erste Druckfeder durch die Führungshülse zusätzlich geführt und vor einem seitlichen Ausweichen gesichert. Das dem ersten Kolben entgegengesetzte Ende der ersten Druckfeder stützt sich an einem axialen Ende des ersten Zylinderraums ab, wobei die erste Druckfeder vorgespannt ist und den ersten Kolben gegen den Sicherungsring drückt. Somit ist gewährleistet, dass in dieser Position der Stößel immer mit seiner maximalen nutzbaren Länge in den Aufnahmeraum für das Filterelement ragt und somit alle zur Anwendung kommenden Filterelemente kontaktieren kann.

Eine zweite oder innere Druckfeder ist koaxial innerhalb der ersten Druckfeder angeordnet, wobei diese zweite Druckfeder im Inneren der Führungshülse angeordnet ist. Dabei können auch hier die Durchmesser der Führungshülse und der zweiten Druckfeder so aufeinander abgestimmt sein, dass die zweite Druckfeder in die Führungshülse eingepresst ist und durch den gleichen Effekt wie die erste Druckfeder positioniert und gehalten wird. Hierbei wird die zweite Druckfeder entlang der inneren Zylinderfläche unter einem elastischen Zusammendrücken ihrer Außenabmessung in die Führungshülse eingeschoben. Die zweite Druckfeder wird hierbei wie die erste Druckfeder durch Eigenspannung in der Führungshülse gehalten und entlang der Führungshülse vor seitlichem Ausweichen abgestützt und geführt.

Innerhalb der ersten Druckfeder ragt die zweite Druckfeder am Ende des ersten Zylinderraums in einen vom Durchmesser kleineren zweiten Zylinderraum hinein und wird hier in einer zylindrischen Aufnahmeöffnung eines zweiten Kolbens aufgenommen. Hierzu sind die beiden Zylinderräume parallel und bevorzugt koaxial zueinander angeordnet. Der zweite Zylinderraum mündet axial offen in den ersten Zylinderraum. Dabei kann die zweite Druckfeder wie in der Führungshülse des ersten Kolbens durch leichtes Zusammendrücken und der dabei entstehenden radialen Spannung sicher in der Aufnahmeöffnung des zweiten Kolbens geklemmt und gehalten werden. In montierter Position wirkt die zweite Druckfeder bei einem Verschieben des ersten Kolbens als direkter Überträger dieser Verschiebung auf den zweiten Kolben. Hierbei wird der zweite Kolben entsprechend im zweiten Zylinderraum verschoben, wobei ein Herausgleiten aus dem zweiten Zylinderraum in den ersten Zylinderraum hinein durch die zweite Druckfeder verhindert wird. Das Verschieben des zweiten Kolbens entlang des zweiten Zylinderraums kann maximal bis zum axialen Ende des zweiten Zylinderraums erfolgen, wobei der zweite Kolben ab einem bestimmten Verschiebeweg wenigstens teilweise im Bereich eines Sichtfensters von außen erkennbar wird. Das Sichtfenster ist dabei bevorzugt radial orientiert, also durch eine radiale Öffnung des zweiten Zylinderraums gebildet. Zweckmäßig befindet sich das Sichtfenster an dem vom ersten Zylinderraum entfernten Ende des zweiten Zylinderraums. Diese Erkennbarkeit des zweiten Kolbens im Sichtfenster zeigt das Vorhandensein eines Filterelements an, wobei die früheste mögliche Erkennbarkeit des zweiten Kolbens im Sichtfenster einem in seinen axialen Abmessungen kleinsten Filterelement entspricht. Wird ein größeres Filterelement in den Aufnahmeraum eingebaut, wird der Raum bzw. der axiale Abstand zwischen diesem Filterelement und der Filterelementanzeige bzw. dem Stößel geringer, so dass der Stößel weiter als bei einem kleinen Filterelement axial verschoben wird. Dies wird durch den zweiten Kolben und dessen maximale Verschiebbarkeit im zweiten Zylinderraum mit einer maximalen Abbildung des zweiten Kolbens im Sichtfenster angezeigt. Hierbei ist es selbstverständlich möglich, dass der zweite Kolben wenigstens mit einer von außen leicht zu identifizierenden Farbbeschichtung versehen ist. Weitere unterschiedliche, insbesondere axial aufeinanderfolgende Farbbeschichtungen des zweiten Kolbens können beispielsweise dazu genutzt werden, in ihren Abmessungen unterschiedliche Filterelemente anzuzeigen.

Werden besonders große Filterelemente eingebaut, kann das zu einer größeren Verschiebung des Stößels und des ersten Kolben führen als es der maximale Verschiebeweg des zweiten Kolbens zulässt. In diesem Fall wird der zweite Kolben bis zum Anschlag bzw. Ende des zweiten Zylinderraums verschoben, wobei ein weiterer, darüber hinaus notwendiger geforderter Verschiebeweg durch ein Zusammendrücken der zweiten Druckfeder kompensiert wird.

Eine weitere vorteilhafte Ausgestaltung der Erfindung sieht vor, dass der zweite Kolben magnetisch ist, oder selber ein Magnet ist bzw. zumindest einen Magneten enthält. Hierdurch kann ab einer vorbestimmten Verschiebung des magnetischen zweiten Kolbens ein elektrischer Schalter, beispielsweise ein Reed-Kontakt/Reed-Schalter betätigt werden. Das somit erzeugte elektrische Signal wird beispielsweise in einer Steuereinheit ausgewertet und zur Darstellung einer Signalanzeige zur Information eines eingebauten Filterelements verwendet. Diese Signalanzeige kann beispielsweise eine Signallampe oder eine Symbolanzeige oder eine Textnachricht in einer Displayanzeige sein. Weitere Anzeigen bzw. Darstellungen sind möglich.

Eine besonders vorteilhafte Weiterentwicklung besteht darin, dass der zweite Zylinderraum einen axialen Durchlass nach außen durch das Gehäuse der Filterelementanzeige aufweist. Das bedeutet insbesondere, dass der zweite Zylinderraum außen am Gehäuse axial offen mündet. Der zweite Kolben kann somit bei eingebautem Filterelement mit seiner farbigen Beschichtung entsprechend aus dem Gehäuse der Filterelementanzeige mehr oder weniger herausragen und somit das Vorhandensein eines Filterelements anzeigen. Durch eine entsprechende Farbcodierung kann dabei auch abhängig von der Länge, mit welcher der zweite Kolben aus dem Gehäuse herausragt, der Typ des aktuellen Filterelements angezeigt werden. Bei dieser Ausführung ist durch den fehlenden Endanschlag der Verschiebeweg des zweiten Kolbens gleich dem des ersten Kolbens, wodurch auf die zweite Feder als Übertragungsglied verzichtet werden kann. Es ist hier ausreichend, anstelle der zweiten Feder eine Stange zur direkten Übertragung zu verwenden. Auch ist es möglich, dass der zweite Kolben einstückig aus dem ersten Kolben ausgeformt ist und vom ersten Kolben ausgehend direkt in den zweiten Zylinderraum hineinragt. Auch können die beiden Zylinderräume dann einen durchgehenden gemeinsamen Zylinderraum bilden, in dem ein gemeinsamer Kolben verstellbar ist, der die beiden Kolben ersetzt. Auch hier ist es denkbar, dass ein magnetischer Effekt des gemeinsamen oder des zweiten Kolbens zum Schalten eines Kontaktes verwendet wird.

Sowohl der erste Kolben als auch der zweite Kolben können an ihren Zylinderumfängen Dichtelemente oder hierfür geeignete Beschichtungen aufweisen, so dass ein Hineinfließen des zu filternden Mediums in die Filterelementanzeige sicher verhindert werden kann.

Gemäß einer Weiterentwicklung kann die gesamte Filterelementanzeige als zuvor montierte Vormontageeinheit mit ihrem Gehäuse in einer korrespondierenden Öffnung des Filtergehäuses oder der technischen Baueinheit/Gehäuse eingepresst, eingeschraubt oder mittels eines Flansches wieder lösbar verbunden sein. Ein Verkleben ist ebenso denkbar wie ein Verlöten der Filterelementanzeige im Filtergehäuse bzw. in der technischen Baueinheit/Gehäuse. Diese Ausführung zeigt den Vorteil auf, dass die Filterelementanzeige zur Wartung komplett ausgebaut werden kann. Auch ist ein schneller Austausch der Filterelementanzeige bei einem Defekt dieser schnell und sicher möglich, so dass Stillstandzeiten der beispielsweise technischen Baueinheit minimiert werden können. Weiter bietet diese Ausführung die Möglichkeit, dass diese Filterelementanzeige an bestehenden technischen Baueinheiten nachgerüstet werden kann.

Von besonderem Vorteil ist eine Ausführungsform, bei der der Stößel nicht eine Stange, sondern eine am ersten Kolben fest montierte Druckfeder aufweist. Diese Druckfeder kann zur Unterscheidung von den vorstehend genannten ersten und zweiten bzw. inneren und äußeren Druckfedern auch als weitere Druckfeder bezeichnet werden. Diese weitere Druckfeder ragt quasi als Stößel in den Aufnahmeraum für das Filterelement hinein und kann durch die Komprimierbarkeit der weiteren Druckfeder einen noch größeren Bereich an möglichen verschiedenen Filterelementen abdecken. Die Federkonstante dieser weiteren Druckfeder muss größer ausgelegt werden als die Federkonstanten der ersten und zweiten Druckfedern, da ansonsten eine Verschiebung des ersten Kolbens und eine Längenkompensation der zweiten Druckfeder nicht sichergestellt ist.

Da die weitere Druckfeder in den Aufnahmeraum für das Filterelement ragt wird die weitere Druckfeder von dem zu filternden Medium um- und durchströmt. Hierbei können sich Schmutzpartikel in den Windungen der weiteren Druckfeder verfangen und bei einer entsprechenden Ansammlung dieser die weitere Druckfeder in ihrer Funktion beeinträchtigen. Hierzu kann vorteilhaft vorgesehen sein, dass die weitere Druckfeder von teleskopartig ineinander greifenden, zylindrischen, hülsenförmigen Segmenten umgriffen wird. Diese Anordnung ermöglicht bei zusammengedrückter weiterer Druckfeder ein ineinander Verschieben dieser hülsenförmigen Segmente, so dass dauerhaft einer Verschmutzung vermieden wird.

Ebenso ist es möglich, dass im überlappenden Bereich der hülsenförmigen Segmente Beschichtungen aufgebracht sind, oder Dichtungselemente vorgesehen sind. Da diese hülsenförmigen Segmente selten zueinander verschoben werden, ist eine Spaltdichtung mit geringer Leckage denkbar. Die hierbei auftretende Leckage ist gering und durch den schmalen Spalt so ausgelegt, dass keine wesentlichen Verschmutzungen zur weiteren Druckfeder eindringen können. Dabei kann die weitere Druckfeder zweckmäßig auch axial von der Teleskopanordnung eingefasst sein, so dass der Kontakt des Stößels mit dem Filterelement nicht über die weitere Druckfeder, sondern über eines der Segmente der Teleskopanordnung erfolgt, das dann topfförmig ausgestaltet ist.

Eine weitere vorteilhafte Ausgestaltung wird mittels eines die weitere Druckfeder, ausgehend vom ersten Kolben, vollständig umgreifenden Faltenbalgs realisiert. Der Faltenbalg weist hier entsprechend der Länge der weiteren Druckfeder angepasst um die weitere Druckfeder umlaufende Falten auf. Bei einer Kompression der weiteren Druckfeder können sich die Falten entsprechend ihrer Ausformung elastisch verändern und zum Beispiel dichter zueinander zum Anliegen kommen. Vorteilhaft ist der Faltenbalg aus einem Elastomer oder Kunststoff gebildet, der eine Resistenz gegenüber dem zu filternden Medium aufweist aber für die Verformung des Faltenbalges entsprechende Elastizität besitzt. Dabei kann die weitere Druckfeder zweckmäßig auch axial von dem Faltenbalg eingefasst sein, so dass der Kontakt des Stößels mit dem Filterelement nicht über die weitere Druckfeder, sondern über ein geschlossenes Ende des Faltenbalgs erfolgt.

Gemäß der Erfindung kann die Filterelementanzeige als eigenständige Baueinheit an einer technischen Baueinheit/Maschineneinheit angebracht werden, wobei aber die Filterelementanzeige auch ein integraler Bestandteil der technischen Baueinheit/Maschineneinheit oder eines Verschlussdeckels des Filtergehäuses sein kann.

Eine weitere erfindungsgemäße Entwicklung sieht vor, dass die Filterelementanzeige als integraler Bestandteil der Filtereinheit an dieser angebaut ist. Hierzu kann die Filterelementanzeige als eigene Baueinheit an das Filterelement angebracht bzw. montiert werden. Ebenso ist es denkbar, dass die Filterelementanzeige einstückig, beispielsweise aus einem Bauteil, vorzugsweise einer Endkappe/Endscheibe, des Filterelements ausgeformt ist und bei montiertem Filterelement diese Filterelementanzeige in einen dafür vorgesehenen Aufnahmeraum der technischen Baueinheit/Maschineneinheit hineinragt. Ein dort vorhandenes Sichtfenster zeigt dann das vorhandene Filterelement an. Die hierbei verwendete Filterelementanzeige kann entgegen der zuvor beschriebenen Ausführung aus Teilumfängen der bei der Wirkkette verwendeten Bauteilen bestehen, wobei eine einwandfreie Funktion aber dennoch gegeben ist. Bei einem Wechsel des Filterelements wird dann auch die Anzeigeeinheit mit ausgetauscht.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine Schnittdarstellung der Filterelementanzeige mit den mechanischen Bauteilen der Wirkkette,
- Fig. 2: eine Schnittdarstellung einer gekapselten Druckfeder anstelle des Stößels in zwei halbseitigen Ausführungen.

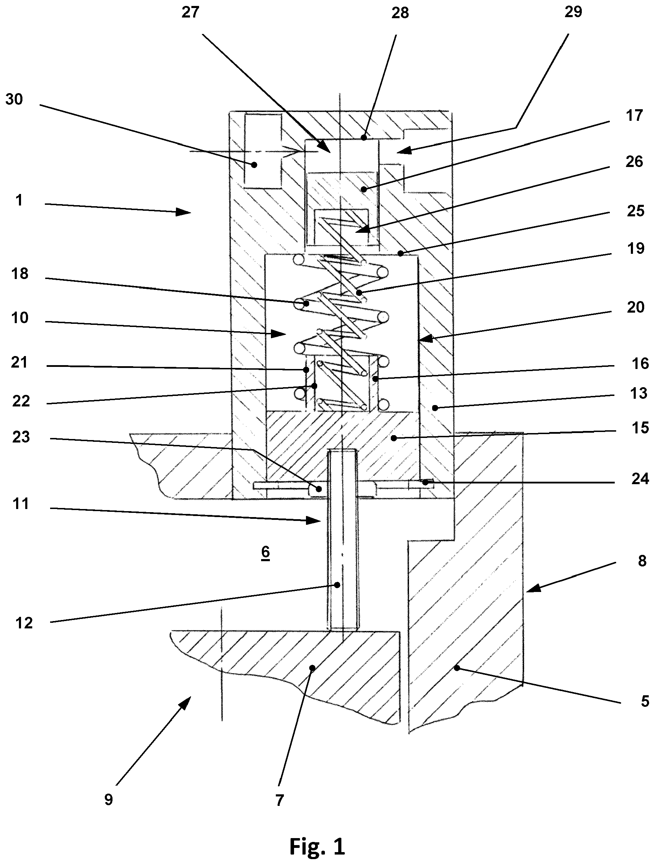

Entsprechend der Figur 1 ist eine Filterelementanzeige 1 als eigenständige Baueinheit im Filtergehäuse 5 bzw. einer technischen Baueinheit/Maschineneinheit 8 eingebaut. Die Funktion der Filterelementanzeige 1 wird durch die Anordnung und Aneinanderreihung von Bauteilen zu einer Wirkkette 10 zusammengestellt, welche vorab zur Baueinheit zusammenmontiert werden kann. Die Filterelementanzeige 1 weist hierzu ein Gehäuse 13 auf, dass alle wesentlichen Bauteile der Wirkkette 10 aufnimmt, wobei das Gehäuse 13 in ein Filtergehäuse 5 oder eine technische Baueinheit/Maschineneinheit 8 eingebaut ist. Dieser Einbau kann beispielsweise mittels einer Verschraubung, einer Flanschausführung, einer Pressung oder Verklebung erfolgen.

Gemäß der Figur 1 kontaktiert ein Stößel 11, der als Stange 12 oder Gewindestange 12 ausgebildet sein kann, ein in einen Aufnahmeraum 6 vorhandenes Filterelement 7. Der Kontakt zwischen Stößel 11 und dem Filterelement 7 ist kontinuierlich und bleibt während der gesamten Zeit, in der das Filterelement 7 in der Filtereinrichtung 9 montiert ist, erhalten.

Der Stößel 11, hier als Gewindestange 12, ist mit seinem dem Filterelement 7 entgegengesetzten Ende in einen ersten Kolben 15 eingeschraubt und wird an diesem mittels eines Befestigungsmittels 23, hier einer Mutter 23 dauerhaft, jedoch lösbar fixiert.

Bei einem Kontakt zwischen der Gewindestange 12 und einem Filterelement 7 wird der erste Kolben 15 über die Gewindestange 12 in einen ersten Zylinderraum 20 hinein verschoben, wobei eine erste Druckfeder 18 zwischen dem ersten Kolben 15 und dem Ende 25 des ersten Zylinderraums 20 komprimiert wird. Die Funktion dieser ersten Druckfeder 18 besteht darin, dass sie den ersten Kolben 15 in seine am Sicherungsring 24 anliegende Ausgangslage zurückdrückt, sowie ein Verschieben des ersten Kolbens15 bei unterschiedlichen Abmessungen von Filterelementen 7 zulässt. Hierbei wird die erste Druckfeder 18 an einer äußeren Zylinderfläche 21 einer Führungshülse 16 aufgenommen und an dieser Führungshülse 16 in den ersten Zylinderraum 20 ragend geführt. Beim Aufschieben der ersten Druckfeder 18 auf die äußere Zylinderfläche 21 der Führungshülse 16 wird die erste Druckfeder 18 in ihrem Durchmesser etwas aufgeweitet, so dass die erste Druckfeder 18 unter Spannung auf der Führungshülse 16 fixiert und dauerhaft gehalten wird.

Die Führungshülse 16 ist als Hohlzylinder ausgelegt und an der dem Stößel 11 entgegengesetzten Seite des ersten Kolbens 15 einstückig an diesem ausgebildet. Die Führungshülse 16 ragt dabei in den ersten Zylinderraum 20 hinein. Innerhalb der Führungshülse 16 ist entlang einer inneren Zylinderfläche 22 eine zweite Druckfeder 19 aufgenommen und an dieser geführt. Ähnlich der Montage der ersten Druckfeder 18 wird die zweite Druckfeder 19 bei der Montage in ihrem Durchmesser etwas zusammengedrückt, so dass diese durch eine nach außen wirkende Spannung in der Führungshülse 16 fixiert und dauerhaft gehalten wird. Die zweite Druckfeder 19 ist innerhalb der ersten Druckfeder 18 positioniert und ragt am Ende 25 des ersten Zylinderraums 20 aus diesem in einen zweiten Zylinderraum 27 hinein. Hierbei wird die zweite Druckfeder 19 in einer Aufnahmeöffnung 26 eines zweiten Kolbens 17 aufgenommen und ist analog zur Befestigung der zweiten Druckfeder 19 in der Führungshülse 16 fixiert und dauerhaft befestigt. Diese an beiden Enden der zweiten Druckfeder 19 ausgeführte dauerhafte Befestigung der zweiten Druckfeder 19 ermöglicht es auch, dass der zweite Kolben 17 in Richtung des ersten Zylinderraums 20 in seine Ausgangsposition zurückbefördert wird. Diese entspricht der Ausgangsposition des ersten Kolbens 15.

Der zweite Kolben 17 kann im zweiten Zylinderraum 27 bis zu dessen Ende 28 verschoben werden. Diese Verschiebung ist eine Weiterleitung des Verschiebewegs des ersten Kolbens 15, wobei diese Verschiebung über die zweite Druckfeder 19 auf den zweiten Kolben 17 übertragen wird. Die zweite Druckfeder 19 ist von ihren Federkennwerten so ausgelegt, dass bis zum Anschlag des zweiten Kolbens 17 am Ende 28 des zweiten Zylinderraums 27 keine Kompression der zweiten Druckfeder 19 erfolgt. Die Verschiebung, welche einer Größe des eingebauten Filterelements 7 entspricht, wird somit bis zum Anschlag des zweiten Kolbens 17 unverändert übertragen.

Befindet sich ein großes Filterelement 7 im Aufnahmeraum 6 so kann die Verschiebung des ersten Kolbens 15 größer ausfallen, als es der Verschiebeweg des zweiten Kolbens 17 ermöglicht. In diesem Fall befindet sich der zweite Kolben 17 am Ende 28 und somit am Anschlag des zweiten Zylinderraums 27 und lässt keine weitere Verschiebung des zweiten Kolbens 17 mehr zu. Die weitere Verschiebung des ersten Kolbens 15 wird hier durch die Kompression der zweiten Druckfeder 19 kompensiert. Auf diese Weise können auch sehr große Filterelemente 7 verwendet werden.

Im Endbereich des zweiten Zylinderraums 27 befindet sich eine Öffnung im Gehäuse 13, welche als Sichtfenster 29 für den zweiten Kolben 17 dient. Vorteilhaft ist der zweite Kolben 17 hier mit wenigstens einer Farbe beschichtet, so dass dieser besonders gut im Sichtfenster 29 den zweiten Kolben 17 und somit eines in der Filtereinrichtung 9 vorhandenes Filterelement 7 anzeigt.

In der Figur 1 nicht dargestellt kann der zweite Kolben 17 magnetisch, einen Magneten enthalten bzw. selber ein Magnet sein. Der hierbei auftretende magnetische Effekt dient dazu, dass nach einem vorbestimmten Verschiebeweg des zweiten Kolbens 17 ein im Gehäuse 13 vorhandener, oder ein am Gehäuse 13 angebrachter magnetischer Schalter 30, beispielsweise ein Reed-Kontakt 30 betätigt wird. Das dabei erzeugte elektrische Signal wird an eine Steuereinheit weitergeleitet, die das Signal auswertet und somit ein im Aufnahmeraum 6 vorhandenes Filterelement 7 beispielsweise mittels einer Signallampe oder einer Anzeige in einem Display anzeigt.

Bei der Verwendung einer Gewindestange 12 als Stößel 11 kann die Gewindestange in der aufnehmenden Gewinde-Sacklochbohrung in ihrer Einschraubtiefe verstellt werden. Somit kann der Stößel 11 in seiner Position eingestellt und an bestimmte Filterelemente 7 angepasst werden.

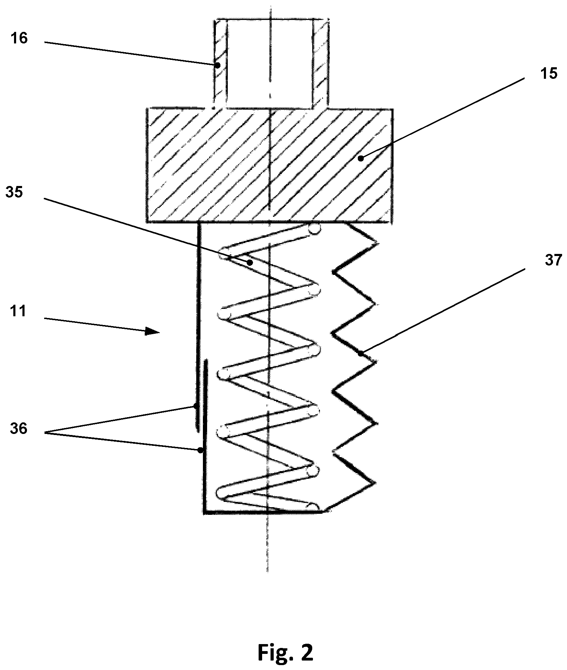

Entsprechend Figur 2 ist eine weitere vorteilhafte Ausführung des Stößels 11 der Filterelementanzeige 1 abgebildet, bei der die Gewindestange 12 bzw. die Stange 12 durch eine weitere Druckfeder 35 ausgetauscht ist. Die weitere Druckfeder 35 ist mit einem Ende an der dem Aufnahmeraum 6 zugewandten Seite des ersten Kolbens 15 fest mit diesem verbunden. Die Verwendung dieser weiteren Druckfeder 35 ermöglicht eine zusätzliche Anpassung des Stößels 11 an Filterelemente 7, welche sehr große bauliche Abweichungen aufweisen können. Die federspezifischen Werte dieser weiteren Druckfeder 35 sind so gewählt, dass die Verschiebung des ersten Kolbens 15 und somit auch des zweiten Kolbens 17 erhalten bleiben.

Zur Vermeidung von sich in den Federwindungen der weiteren Druckfeder 35 festsetzenden Verunreinigungen weist der Stößel 11 ineinander greifende, zylindrische, hülsenförmige Segmente 36 auf, die in Fig. 2 links dargestellt sind und die weitere Druckfeder 35 umgreifen und eine Teleskopanordnung bilden. Diese Teleskopanordnung ermöglicht beim Zusammendrücken der weiteren Druckfeder 35 ein ineinander Verschieben dieser hülsenförmigen Segmente 36, so dass dauerhaft eine Verschmutzung vermieden werden kann. Ebenso ist es möglich, dass im überlappenden Bereich der hülsenförmigen Segmente 36 hier nicht abgebildete Beschichtungen oder Dichtungen aufgebracht sind.

Anstelle der ineinander verschiebbaren, hülsenförmigen Segmente 36 kann der Stößel 11 auch ein die weitere Druckfeder 35 vollständig umgreifender Faltenbalg 37 aus einem elastisch verformbaren Material aufweisen, der in Fig. 2 rechts dargestellt ist. Entsprechend der Kompression der weiteren Druckfeder 35 werden die Falten des Faltenbalgs 37 mehr oder weniger zusammengeschoben und die weitere Druckfeder 35 vollumfänglich abgedichtet.

### Bezugszeichenliste

- 1: Filterelementanzeige

- 5: Filtergehäuse, Filterelementgehäuse, Gehäuse zur Aufnahme eines Filterelements
- 6: Aufnahmeraum, Aufnahmeraum für ein Filterelement
- 7: Filterelement
- 8: Gehäuse, techn. Baueinheit, Maschineneinheit
- 9: Filtereinrichtung
- 10: Wirkkette
- 11: Stößel
- 12: Stange, Gewindestange
- 13: Gehäuse, Gehäuse der Filterelementanzeige

- 15: erster Kolben
- 16: Führungshülse
- 17: zweiter Kolben
- 18: erste Druckfeder
- 19: zweite Druckfeder
- 20: erster Zylinderraum
- 21: äußere Zylinderfläche
- 22: innere Zylinderfläche
- 23: Befestigungsmittel, Mutter
- 24: Sicherungselement, Sicherungsring
- 25: Ende des ersten zylindrischen Aufnahmeraums
- 26: Aufnahmeöffnung
- 27: zweiter Zylinderraum
- 28: Ende, Ende des zweiten Aufnahmeraums
- 29: Sichtfenster
- 30: magnetischer Schalter

- 35: Druckfeder
- 36: teleskopartig ineinander greifende zylindrische hülsenförmige Segmente
- 37: Faltenbalg

## Patentansprüche

1. Filterelementanzeige (1) zum Anzeigen, dass in einem Aufnahmeraum (6) für ein Filterelement (7), insbesondere eines Filtergehäuses (5), ein Filterelement (7) vorhanden ist oder nicht,
- wobei der Aufnahmeraum (6) zur Aufnahme von in ihrer Geometrie und/oder Abmessung unterschiedlichen Filterelementen (7) vorgesehen ist,
**dadurch gekennzeichnet,**
- **dass** die Filterelementanzeige (1) zum Anzeigen des Vorhandenseins und Fehlens dieser unterschiedlichen Filterelemente (7) ausgestaltet ist,
- **dass** die Filterelementanzeige (1) eine mechanische Wirkkette (10) mit Kolben (15, 17) und Druckfedern (18, 19) aufweist,
- **dass** diese Wirkkette (10) bei in den Aufnahmeraum (6) eingesetztem Filterelement (7) mittels eines in den Aufnahmeraum (6) ragenden Stößels (11) einen permanenten Kontakt zwischen der Filterelementanzeige (1) und dem Filterelement (7) herstellt.

2. Filterelementanzeige (1) nach Anspruch 1,
**dadurch gekennzeichnet,**
**dass** der Stößel (11) als Stange (12) ausgelegt ist und die Stange (12) mit ihrem zur Filterelementanzeige (1) weisenden Ende in/an einem ersten Kolben (15) zentrisch befestigt ist.

3. Filterelementanzeige (1) nach Anspruch 1 oder 2,
**dadurch gekennzeichnet,**
**dass** der Stößel (11) als Gewindestange (12) ausgelegt ist und die Gewindestange (12) mit ihrem zur Filterelementanzeige (1) weisenden Ende in einen ersten Kolben (15) zentrisch eingeschraubt ist und die Gewindestange (12) in einer vorbestimmten Position in diesem ersten Kolben (15) mittels Befestigungsmitteln (23) fixiert ist.

4. Filterelementanzeige (1) nach einem der Ansprüche 1 bis 3,
**dadurch gekennzeichnet,**
- **dass** der erste Kolben (15) der Filterelementanzeige (1) in einem ersten Zylinderraum (20) aufgenommen und längsverschiebbar geführt ist und der erste Kolben (15) an seiner dem Stößel (11) entgegengesetzten Seite eine in den ersten Zylinderraum (20) ragende Führungshülse (16) aufweist,
- **dass** eine an der äußeren Zylinderfläche (21) der Führungshülse (16) angeordnete äußere Druckfeder (18) vorgesehen ist,
- **dass** eine an der inneren Zylinderfläche (22) der Führungshülse (16) angeordnete innere Druckfeder (19) vorgesehen ist, die koaxial in der äußeren Druckfeder (18) angeordnet ist.

5. Filterelementanzeige (1) nach Anspruche 4,
**dadurch gekennzeichnet,**
- **dass** die äußere Druckfeder (18) sich an einem Ende (25) des ersten Zylinderraums (20) abstützt und die innere Druckfeder (19) über das Ende (25) des ersten Zylinderraums (20) hinausragend in eine Aufnahmeöffnung (26) eines zweiten Kolbens (17) hineinragt,
- **dass** dieser zweite Kolben (17) in einem zweiten Zylinderraum (27), dessen Durchmesser kleiner ist als der Durchmesser des ersten Zylinderraums (20), längsverschiebbar geführt ist,
- **dass** der zweite Zylinderraum (27) offen in den ersten Zylinderraum (20) übergeht.

6. Filterelementanzeige (1) nach Anspruch 5,
**dadurch gekennzeichnet,**
**dass** ab einer bestimmten Längsverschiebung des zweiten Kolbens (17) dieser bis zu einer maximalen Längsverschiebung an einem Ende (28) des zweiten Zylinderraums (27), der zweite Kolben (17) über ein Sichtfenster (29) das Vorhandensein eines Filterelements (7) anzeigt, wobei insbesondere vorgesehen sein kann,
**dass** der zweite Kolben (17) zur besseren Identifikation im Sichtfenster (29) an seinem Außenumfang mit wenigstens einer Farbe beschichtet ist.

7. Filterelementanzeige (1) nach einem der Ansprüche 5 bis 6,
**dadurch gekennzeichnet,**
**dass** bei einem größeren Verschiebeweg des ersten Kolbens (15) als es der maximale mögliche Verschiebeweg des zweiten Kolbens (17) ermöglicht, der darüber hinaus gehende zusätzliche Verschiebeweg des ersten Kolbens (15) diese zusätzlich benötigte Verschiebung für den zweiten Kolben (17) durch die Kompression der inneren Druckfeder (19) ausgleicht/kompensiert.

8. Filterelementanzeige (1) nach einem der Ansprüche 4 bis 7,
**dadurch gekennzeichnet,**
**dass** ab einem vorbestimmten Verschiebeweg der zweite Kolben (17) aus dem zweiten Zylinderraum (27) zur Anzeige eines vorhandenen Filterelements (7) herausragen kann und hierbei der zweite Kolben (17) mit wenigstens einer Farbe beschichtet ist.

9. Filterelementanzeige (1) nach einem der Ansprüche 4 bis 8,
**dadurch gekennzeichnet,**
**dass** der zweite Kolben (17) magnetisch ist oder als Magnet ausgelegt ist oder einen Magneten aufweist, und ab einem vorbestimmten Verschiebeweg des zweiten Kolbens (17), dieser einen magnetischen Schalter (30) betätigt.

10. Filterelementanzeige (1) nach Anspruch 2 oder nach Anspruch 2 und einem der Ansprüche 3 bis 9,
**dadurch gekennzeichnet,**
**dass** der Stößel (11) beispielsweise als Druckfeder (35) zum Ausgleich und zur Anpassung stark abweichender Geometrien und/oder Abmessungen von Filterelementen (7) ausgelegt ist und zur Filterelementanzeige (1) weisend in/an dem ersten Kolben (15) befestigt ist.

11. Filterelementanzeige (1) nach Anspruch 10,
**dadurch gekennzeichnet,**
- **dass** die Druckfeder (35) zur Vermeidung von Verunreinigungen von teleskopartig ineinander greifenden zylindrischen hülsenförmigen Segmenten (36) umgriffen wird, oder
- **dass** die Druckfeder (35) zur Vermeidung von Verunreinigungen von einem elastischen Faltenbalg (37) umgriffen wird.

12. Filterelementanzeige (1) nach einem der Ansprüche 1 bis 11,
**dadurch gekennzeichnet,**
**dass** die Filterelementanzeige (1) sowohl aus dem Gehäuse (8) zur Aufnahme des Filterelements (7) als auch im Verschlussdeckel zum Verschließen des Aufnahmeraums (6) einstückig ausgeformt oder als separates Bauteil austauschbar ausgeführt ist.

13. Filterelementanzeige (1) nach einem der Ansprüche 1 bis 11,
**dadurch gekennzeichnet,**
**dass** die Filterelementanzeige (1) integraler Bestandteil des Filterelements (7) ist und bei eines im Aufnahmeraum (6) vorhanden Filterelements (7), dessen Vorhandensein mittels eines Stößels (11) und/oder eines, insbesondere farbig beschichteten, Kolbens am Gehäuse (8) zur Aufnahme des Filterelements (7) als auch am Verschlussdeckel zum Verschließen des Aufnahmeraums (6) des Filterelements (7) anzeigt.

14. Filterelement (7) mit einer Filterelementanzeige (1) nach einem oder mehreren der vorangehenden Ansprüche,
**dadurch gekennzeichnet,**
- **dass** das Filterelement (7) eine Filterelementanzeige (1) aufweist, welche Bestandteil des Filterelements (7) ist,
- **dass** die Filterelementanzeige (1) wenigstens als Teilumfang der Wirkkette (10) am Filterelement (7) ausgebildet ist,
- **dass** beim Austausch des Filterelements (7) die Filterelementanzeige (1) zwangsweise mit ausgetaucht wird.

15. Filtereinrichtung (9) mit einem Aufnahmeraum (6) zur Aufnahme eines Filterelements (7) und mit einer Filterelementanzeige (1) nach einem der Ansprüche 1 bis 13,
**dadurch gekennzeichnet,**
- **dass** in den Aufnahmeraum (6) der Filtereinrichtung (9) in ihrer Geometrie und/oder Abmessungen unterschiedliche Filterelemente (7) aufgenommen werden können,
- **dass** die Filterelementanzeige (1) zumindest aus einem Teil der Wirkkette (10) besteht und geeignet ist das Vorhandensein oder nicht Vorhandensein eines Filterelements (7) im Aufnahmeraum (6) der Filtereinrichtung (9) anzuzeigen.
